# EUROPÄISCHE PATENTANMELDUNG

(11) **EP 4 717 698 A1**
(43) Veröffentlichungstag der Anmeldung: **01.04.2026**
(21) Anmeldenummer: 24203568.1
(22) Anmeldetag: 30.09.2024
(51) Int. Cl.: C07F 9/6574, C07F 15/00, B01J 31/18, C07C 45/00, C07C 47/00

(54) **PHOSPHORAMIDITE MIT EINEM PYRROL-REST ODER INDOL-REST**

(71) Anmelder: Evonik Oxeno GmbH & Co. KG, 45772 Marl (DE)
(72) Erfinder: FRANKE, Robert, 45772 Marl (DE); BÜRKER, Julia, 44787 Bochum (DE); BÖRNER, Armin, 18059 Rostock (DE); HOLZ, Jens, 18196 Kessin (DE); ROMEIKE, Kerstin, 18109 Rostock (DE); WENZEL, Gudrun, 18196 Kessin (DE)
(74) Vertreter: Evonik Patent Association

(57) **Zusammenfassung**

Phosphoramidite mit einem Pyrrol-Rest oder Indol-Rest und deren Verwendung in der Hydroformylierung.

## Beschreibung

Die Erfindung betrifft Phosphoramidite mit einem Pyrrol-Rest oder Indol-Rest und deren Verwendung in der Hydroformylierung.

Phosphorhaltige Verbindungen spielen als Liganden in einer Vielzahl von Reaktionen eine entscheidende Rolle, z.B. in der Hydrierung, in der Hydrocyanierung und auch in der Hydroformylierung.

In WO 2024/103456 A1 werden Katalysatoren für die Hydroformylierung von Olefinen beschrieben. Der Katalysator besteht aus einem Metallzentrum und einem Liganden. Der Ligand ist ein Phosphoramidit mit einer Carbazolgruppe.

Die technische Aufgabe der Erfindung ist die Bereitstellung einer Verbindung, mit welcher bei der Hydroformylierung von Olefinen eine gute Ausbeute erzielt werden kann.

Die Aufgabe wird gelöst durch eine Verbindung gemäß Anspruch 1.

Verbindung gemäß Formel (**I**) oder (**II**): 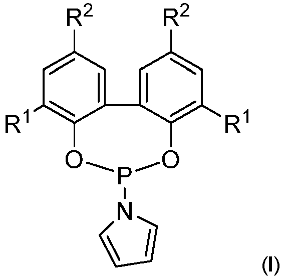 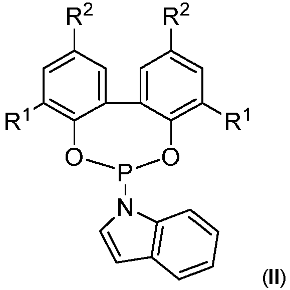 wobei R¹ und R² ausgewählt sind aus: -(C₁-C₆)-Alkyl, -O-(C₁-C₆)-Alkyl.

In einer Ausführungsform sind R¹ und R² ausgewählt aus: -(C₁-C₄)-Alkyl, -O-(C₁-C₄)-Alkyl.

In einer Ausführungsform sind R¹ und R² ausgewählt aus: -CH₃, -*^{t}*Bu, -O-CH₃.

In einer Ausführungsform ist für den Fall, dass R¹ für -CH₃ steht, R² ausgewählt aus: -CH₃, -O-CH₃.

In einer Ausführungsform weist die Verbindung die Struktur (la) oder (Ila) auf:

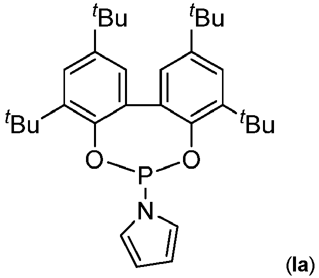

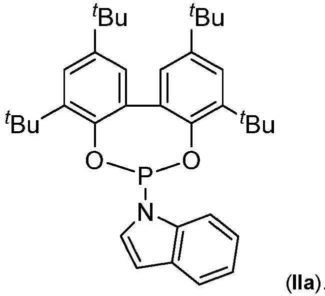

In einer Ausführungsform weist die Verbindung die Struktur (**Ib**) oder (**IIb**) auf:

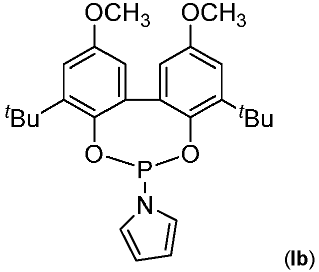

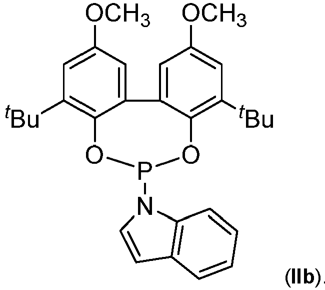

In einer Ausführungsform weist die Verbindung die Struktur (**Ic**) oder (**IIc**) auf:

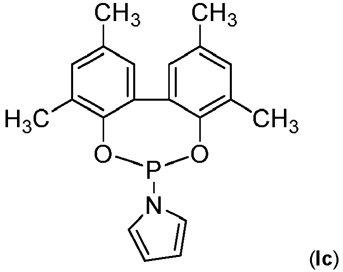

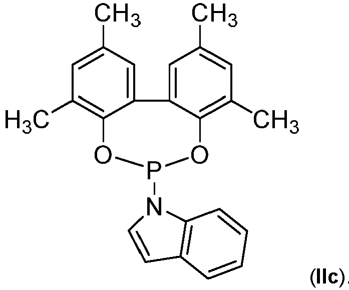

In einer Ausführungsform handelt es sich bei der Verbindung um eine Verbindung gemäß Formel (**I**).

In einer Ausführungsform handelt es sich bei der Verbindung um eine Verbindung gemäß Formel (**II**).

Neben den Verbindungen selbst wird auch ein Verfahren beansprucht, in dem die zuvor beschriebenen Verbindungen zum Einsatz kommen.

Verfahren umfassend die Verfahrensschritte:
a) Vorlegen eines Olefins;
b) Zugabe einer zuvor beschriebenen Verbindung;
c) Zugabe einer Substanz, welche Rh umfasst;
d) Zuführen von H₂ und CO;
e) Erwärmen des Reaktionsgemisches aus a) bis d), wobei das Olefin zu einem Aldehyd umgesetzt wird.

In einer Variante des Verfahrens ist die Substanz, welche Rh umfasst, ausgewählt aus: Rh(acac)(CO)₂, Rh(acac)(cod) (Umicore, acac = Acetylacetonat-Anion; cod = 1,5-Cyclooctadien), Rh₄CO₁₂.

In einer Variante des Verfahrens ist die Substanz, welche Rh umfasst, (Rh(acac)(cod).

Im Folgenden soll die Erfindung anhand von Ausführungsbeispielen näher erläutert werden.

### Synthese

### Allgemeine Vorschrift

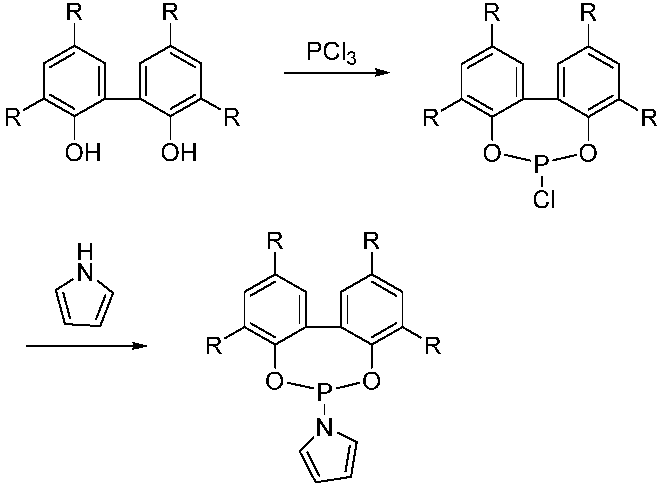

Zu einer Lösung des Heteroaromaten (2 mmol) in absolutem Dichlormethan (20 ml) gibt man unter Argon-Atmosphäre und bei 0 °C zunächst Triethylamin (6 mmol, 607 mg) und anschließend langsam eine Lösung von Phosphortrichlorid (2 mmol, 275 mg) in Dichlormethan (2 ml) hinzu. Nach 15 Minuten wird die Reaktionslösung bei 38 °C Badtemperatur für vier Stunden gerührt. Nach dem Abkühlen auf erneut 0 °C erfolgt die Zugabe von 1.7 Äquivalenten des entsprechenden 2,2'-Dihydroxy-Biphenol-Derivates als Feststoff in einer Portion. Nach 15 min bei 0 °C lässt man erneut über Nacht bei 38 °C rühren.

Zur Aufarbeitung wird das Lösemittel und überschüssige Triethylamin unter Vakuum entfernt und der verbleibende Rückstand mit absolutem Toluol (10 ml) aufgenommen. Nach zehn Minuten rühren bei Raumtemperatur wird der verbliebende weiße Rückstand (Triethylammoniumchlorid) abfiltriert und das Filtrat erneut unter Vakuum eingeengt und der Rückstand bei 40 °C getrocknet.

Die Reinigung erfolgt durch rasche Säulenchromatographie an Kieselgel (Normalphase).

Die erhaltenen Syntheseausbeuten sind in der nachfolgenden Tabelle 1 gelistet:

| Ligand | Ausbeute [%] |
|---|---|
| **Ia** | 83 |
| **IIa** | 74 |
| **Ib** | 84 |
| **IIb** | 62 |
| **Ic** | 73 |
| **IIc** | 64 |

### Katalyseversuche

Die Hydroformylierung wurde in einem mit Druckregulierung, Gasflussmessung, Gaseintragsrührer und Druckpipette ausgestatteten 200 ml-Autoklaven der Fa. Premex Reactor AG, Lengau, Schweiz, durchgeführt. Zur Minimierung eines Einflusses von Feuchtigkeit und Sauerstoff wurde das Solvens (Toluol) in einem Pure Solv. MD-7 System gereinigt, abgefüllt und unter Argon aufbewahrt. Das n-Octen-Gemisch wurde über Natrium am Rückfluss erhitzt und unter Argon destilliert.

Im Autoklav wurden unter Argon-Atmosphäre die Lösungen der Katalysatorvorstufe (Rh(acac)(cod), 0.0432 mmol (10 ml einer 4.32 mM Lösung in Toluol) und des Liganden 0.0864 mmol (31 ml einer 6.97 mM Lösung in Toluol) überführt. Der Autoklav wurde bei 12 bar (Synthesegas) für einen angestrebten Reaktionsdruck von 20 bar unter Rühren (1500 U/min) aufgeheizt. Nach Erreichen der Reaktionstemperatur wurde das Olefin (n-Octen-Gemisch, 15 ml, 95.7 mmol) mit einem in der Druckpipette eingestellten Überdruck in den Autoklaven gepresst, so dass nach Zugabe der Arbeitsdruck von 20 bar realisiert wird. Die Reaktion wurde bei konstantem Druck (Nachdruckregler der Fa. Bronkhorst, NL) über einen festgelegten Zeitraum von 4 Stunden durchgeführt. Der Autoklav wurde nach Ablauf der Reaktionszeit auf Raumtemperatur abgekühlt, unter Rühren entspannt und mit Argon gespült.

Eine entnommene Probenmenge (1.0 ml) wurden anschließend mit 10 ml Pentan verdünnt und gaschromatographisch analysiert: HP 5890 Series II plus, PONA, 50 m x 0,2 mm x 0,5 µm.

Es wurden drei Testreihen (a bis c) gefahren. Jede der drei Reihen wurde auch mit einer Vergleichsverbindung (**IIIa** - **IIIc**) durchgeführt.

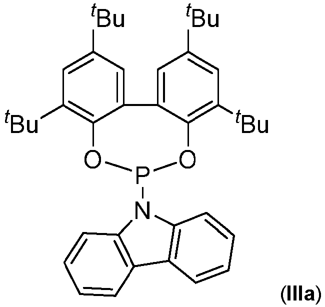

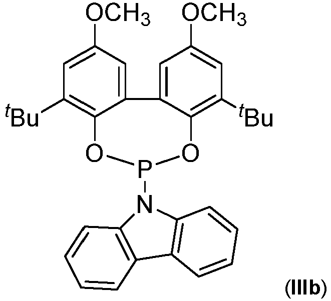

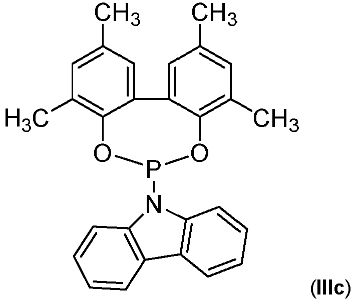

### Ergebnisse der Katalyseversuche

Die Ergebnisse der Katalyseversuche sind in den Tabellen 2 bis 4 gelistet.

**Tabelle 2: Versuchsreihe a**

| Ligand | Ausbeute [%] |
|---|---|
| **Ia** | 98 |
| **IIa** | 67 |
| **IIIa*** | 24 |

| | |
|---|---|
| *) nichterfindungsgemäßes Vergleichsbeispiel | |

**Tabelle 3: Versuchsreihe b**

| Ligand | Ausbeute [%] |
|---|---|
| **Ib** | 97 |
| **IIb** | 63 |
| **IIIb*** | 30 |

| | |
|---|---|
| *) nichterfindungsgemäßes Vergleichsbeispiel | |

**Tabelle 4: Versuchsreihe c**

| Ligand | Ausbeute [%] |
|---|---|
| **Ic** | 98 |
| **IIc** | 93 |
| **IIIc*** | 39 |

| | |
|---|---|
| *) nichterfindungsgemäßes Vergleichsbeispiel | |

Die durchgeführten Versuche belegen, dass die gestellte Aufgabe durch eine erfindungsgemäße Verbindung gelöst wird.

## Patentansprüche

1. Verbindung gemäß Formel (**I**) oder (**II**): 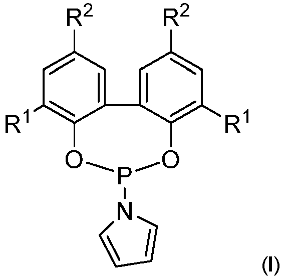 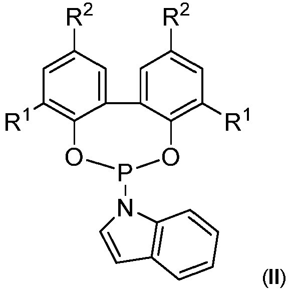 wobei R¹ und R² ausgewählt sind aus: -(C₁-C₆)-Alkyl, -O-(C₁-C₆)-Alkyl.

2. Verbindung nach Anspruch 1,
wobei R¹ und R² ausgewählt sind aus: -(C₁-C₄)-Alkyl, -O-(C₁-C₄)-Alkyl.

3. Verbindung nach einem der Ansprüche 1 oder 2,
wobei R¹ und R² ausgewählt sind aus: -CH₃, -*^{t}*Bu, -O-CH₃.

4. Verbindung nach einem der Ansprüche 1 bis 3,
wobei für den Fall, dass R¹ für -CH₃ steht, R² ausgewählt ist aus : -CH₃, -O-CH₃.

5. Verbindung nach einem der Ansprüche 1 bis 4,
wobei die Verbindung die Struktur (la) oder (Ila) aufweist:

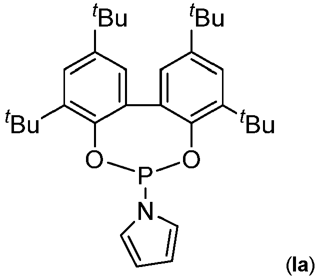

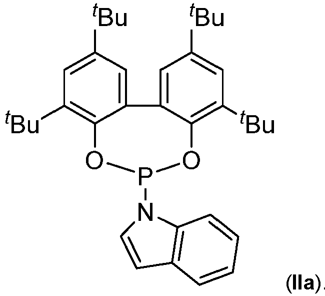

6. Verbindung nach einem der Ansprüche 1 bis 4,
wobei die Verbindung die Struktur (**Ib**) oder (**IIb**) aufweist:

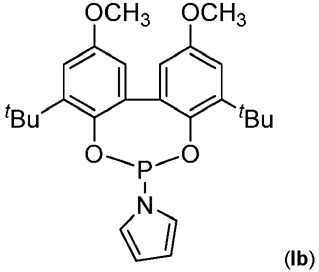

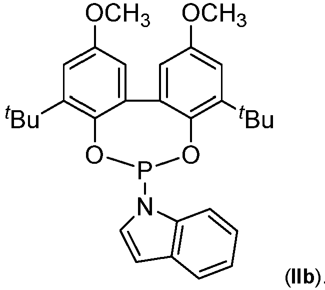

7. Verbindung nach einem der Ansprüche 1 bis 4,
wobei die Verbindung die Struktur (**Ic**) oder (**IIc**) aufweist:

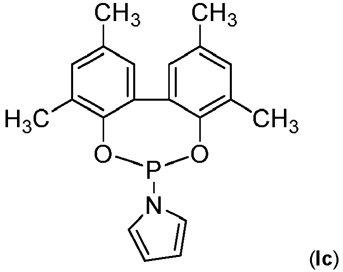

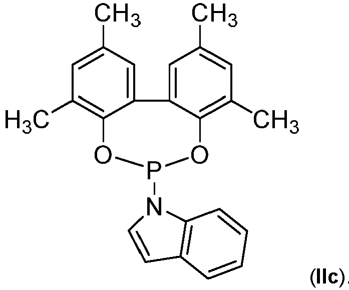

8. Verbindung nach einem der Ansprüche 1 bis 7,
wobei es sich bei der Verbindung um eine Verbindung gemäß Formel (**I**) handelt.

9. Verbindung nach einem der Ansprüche 1 bis 7,
wobei es sich bei der Verbindung um eine Verbindung gemäß Formel (**II**) handelt.

10. Verfahren umfassend die Verfahrensschritte:
a) Vorlegen eines Olefins;
b) Zugabe einer Verbindung nach einem der Ansprüche 1 bis 9;
c) Zugabe einer Substanz, welche Rh umfasst;
d) Zuführen von H₂ und CO;
e) Erwärmen des Reaktionsgemisches aus a) bis d), wobei das Olefin zu einem Aldehyd umgesetzt wird.

11. Verfahren nach Anspruch 10,
wobei die Substanz, welche Rh umfasst, ausgewählt ist aus: Rh(acac)(CO)₂, Rh(acac)(cod) (Umicore, acac = Acetylacetonat-Anion; cod = 1,5-Cyclooctadien), Rh₄CO₁₂.

12. Verfahren nach einem der Ansprüche 10 oder 11,
wobei die Substanz, welche Rh umfasst, Rh(acac)(CO)₂ ist.

## Geänderte Patentansprüche

### Geänderte Patentansprüche gemäss Regel 137(2) EPÜ.

1. Verbindung gemäß Formel (**I**) oder (**II**): 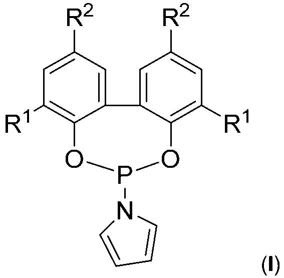 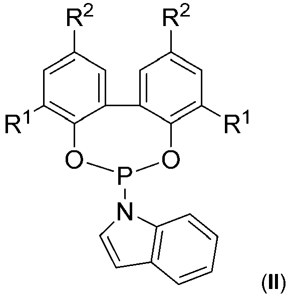 wobei R¹ und R² ausgewählt sind aus: -(C₁-C₆)-Alkyl, -O-(C₁-C₆)-Alkyl.

2. Verbindung nach Anspruch 1,
wobei R¹ und R² ausgewählt sind aus: -(C₁-C₄)-Alkyl, -O-(C₁-C₄)-Alkyl.

3. Verbindung nach einem der Ansprüche 1 oder 2,
wobei R¹ und R² ausgewählt sind aus: -CH₃, -*^{t}*Bu, -O-CH₃.

4. Verbindung nach einem der Ansprüche 1 bis 3,
wobei für den Fall, dass R¹ für -CH₃ steht, R² ausgewählt ist aus : -CH₃, -O-CH₃.

5. Verbindung nach einem der Ansprüche 1 bis 4,
wobei die Verbindung die Struktur (la) oder (IIa) aufweist:

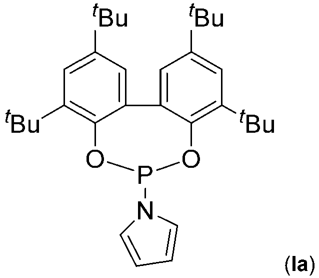

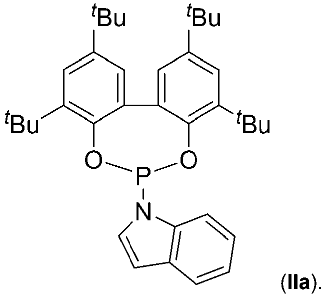

6. Verbindung nach einem der Ansprüche 1 bis 4,
wobei die Verbindung die Struktur (Ib) oder (IIb) aufweist:

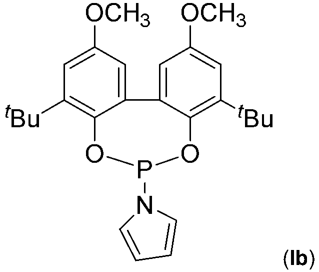

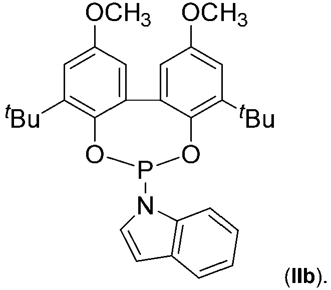

7. Verbindung nach einem der Ansprüche 1 bis 4,
wobei die Verbindung die Struktur (**Ic**) oder (**IIc**) aufweist:

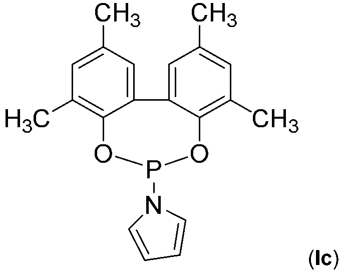

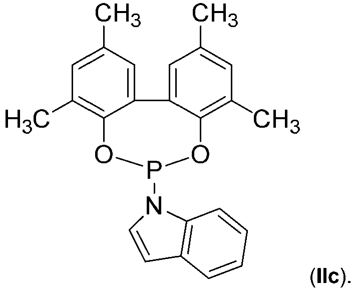

8. Verbindung nach einem der Ansprüche 1 bis 7,
wobei es sich bei der Verbindung um eine Verbindung gemäß Formel **(I)** handelt.

9. Verbindung nach einem der Ansprüche 1 bis 7,
wobei es sich bei der Verbindung um eine Verbindung gemäß Formel (**II**) handelt.

10. Verfahren zur Herstellung eines Aldehyds umfassend die Verfahrensschritte:
a) Vorlegen eines Olefins;
b) Zugabe einer Verbindung nach einem der Ansprüche 1 bis 9;
c) Zugabe einer Substanz, welche Rh umfasst;
d) Zuführen von H₂ und CO;
e) Erwärmen des Reaktionsgemisches aus a) bis d), wobei das Olefin zu einem Aldehyd umgesetzt wird.

11. Verfahren nach Anspruch 10,
wobei die Substanz, welche Rh umfasst, ausgewählt ist aus: Rh(acac)(CO)₂, Rh(acac)(cod) (Umicore, acac = Acetylacetonat-Anion; cod = 1,5-Cyclooctadien), Rh₄CO₁₂.

12. Verfahren nach einem der Ansprüche 10 oder 11,
wobei die Substanz, welche Rh umfasst, Rh(acac)(CO)₂ ist.
